# EUROPÄISCHE PATENTSCHRIFT

(11) **EP 1 068 120 B1**
(45) Veröffentlichungstag und Bekanntmachung des Hinweises auf die Patenterteilung: **03.07.2002**
(21) Anmeldenummer: 99915691.2
(22) Anmeldetag: 23.03.1999
(51) Int. Cl.: B60T 8/36, G01L 9/00

(54) **DRUCKSENSORBAUGRUPPE**
PRESSURE SENSOR ASSEMBLY
BLOC DE COMPOSANTS DETECTEURS DE PRESSION

(30) Priorität: 31.03.1998 DE 19814311; 31.03.1998 DE 19814306; 10.09.1998 DE 19841334
(43) Veröffentlichungstag der Anmeldung: 17.01.2001
(73) Patentinhaber: Continental Teves AG & Co. oHG, 60488 Frankfurt am Main (DE)
(72) Erfinder: BAYER, Ronald, D-63165 Mühlheim (DE); RÜFFER, Manfred, D-65843 Sulzbach (DE); NEUMANN, Ulrich, D-64380 Robssorf (DE); KLEIN, Andreas, D-61350 Bad Homburg (DE); JUNGBECKER, Johann, D-55576 Badenheim (DE); ALBRICH VON ALBRICHSFELD, Christian, D-64283 Darmstadt (DE)
(86) Internationale Anmeldenummer: EP9901950
(87) Internationale Veröffentlichungsnummer: WO9950115

(56) Entgegenhaltungen:
- WO-A-97/00433
- DE-A- 19 514 383
- DE-U- 29 714 229
- US-A- 4 442 716
- US-A- 4 513 623

## Beschreibung

Die Erfindung betrifft eine Drucksensorbaugruppe, insbesondere für ein Drucksteuergerät für radschlupfgeregelte Kraftfahrzeug-Bremsanlagen, nach dem Oberbegriff des Patentanspruchs 1.

Aus der DE 195 14 383 A1 geht bereits ein derartiges Drucksteuergerät für eine radschlupfgeregelte Kraftfahrzeug-Bremsanlage hervor, das ein erstes Gehäuse zur Aufnahme von mehreren elektrisch betätigbaren Drucksteuerventilen und ein zweites Gehäuse zur Aufnahme von elektrischen und elektronischen Bauelementen aufweist. Beim Aufsetzen des zweiten Gehäuses auf das erste Gehäuse werden nicht nur die Drucksteuerventile elektrisch kontaktiert, sondern auch die im ersten blockförmigen Gehäuse befestigten Drucksensoren, deren elektrische bzw. elektronische Bauteile in den einzelnen Sensorgehäusen integriert sind.

Damit ergibt sich eine aufgelöste Bauweise, bei der jeder einzelne Drucksensor prüf- und montageaufwendig mit den entsprechenden Komponenten in das Drucksteuergerät separat einzufhhren und elektrisch zu kontaktieren ist.

Aus der WO-A-97/00433 geht eine Druckmeßvorrichtung mit einer Sensorplatte hervor, die mehrere Meßmembranen zur Messung unterschiedlicher Drücke aufweist. Die Meßmembranen sind gleichmäßig nach Art einer Matrix auf der Sensorplatte verteilt.

Aus der US-A-4 442 716 ist ein Druckmeßmodul bekannt geworden, mit einer Druckanschlußbaugruppe und einer darunter gelegenen Heizplatte, die auf einer Dichtung ruht. Die Druckanschlußbaugruppe befindet sich auf einem Druckaufnehmerrahmen und die Heizplatte und die Dichtung sind innerhalb des Druckaufnehmerrahmens angeordnet. Der Druckaufnehmerrahmen umschließt die mit den Steckkontakten versehenen Druckaufnehmer, die von elektrischen Fassungen an der Oberseite einer gedruckten Schaltung aufgenommen sind. Die Druckanschlußbaugruppe ist mittels Schrauben an dem Druckaufnehmerrahmen befestigt.

In der DE-U-297 14 229 ist eine Bodenplatte für eine Getriebesteuerung beschrieben, die in einem Gehäuse eingesetzt ist, welches eine Leiterplatte mit elektrischen und elektronischen Bauelementen zum Steuern von elektrohyraulischen Aktuatoren sowie Drucksensoren aufnimmt, die mit den elektrischen Kontakten der Leiterplatte verbunden sind.

Die Aufgabe der Erfindung ist es, eine Drucksensorbaugruppe zu schaffen, die eine herstelltechnisch vereinfachte Drucksensoranordnung in einem Drucksteuergerät ermöglicht.

Diese Aufgabe wird erfindungsgemäß für eine Drucksensorbaugruppe der eingangs genannten Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung eines Ausführungsbeispiels anhand mehrerer Zeichnungen hervor.

Es zeigen:
- Fig. 1: eine Gesamtansicht eines Drucksteuergerätes zum Betrieb einer radschlupfgeregelten KraftfahrzeugBremsanlage,
- Fig. 2: eine Explosionsdarstellung der in Figur 1 dargestellten Drucksensorbaugruppe,
- Fig. 3: die in Fig. 2 gezeigte Drucksensorbaugruppe im Querschnitt.

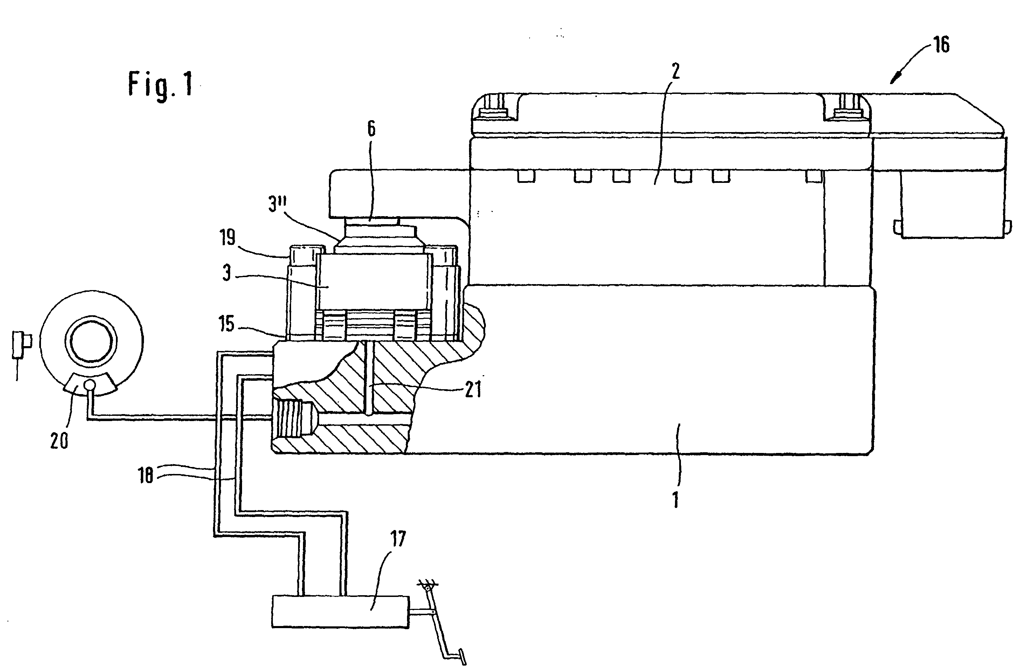

Die Fig. 1 zeigt in schematischer Darstellung ein Drucksteuergerät 16, bestehend aus einem ersten, blockförmigen Gehäuse 1 zur Aufnahme von mehreren elektrisch betätigbaren Drucksteuerventilen, auf das ein zweites blockförmiges Gehäuse 2 aufgesetzt ist, das elektrische und elektronische Bauelemente beinhaltet, die beim Aufsetzen des zweiten Gehäuses auf das erste Gehäuse 1 die Drucksteuerventile elektrisch kontaktieren. Ferner beinhaltet das Drucksteuergerät 16 mehrere Drucksensoren 4 zur Überwachung des Hydraulikdrucks im ersten Gehäuse 1, die erfindungsgemäß in einem Trägergehäuse 3 angeordnet sind, das als funktionsfähige und vorprüfbare Baugruppe eine eigenständig handhabbare Unterbaugruppe des Drucksteuergeräts 16 bildet. Diese im nachfolgenden auch als Drucksensormodul bezeichnete Unterbaugruppe ist im frei zugänglichen Gerätebereich zwischen dem ersten und zweiten Gehäuse 1,2 angeordnet. Zur Befestigung des Trägergehäuses 3 am Gehäuse 1 sind im vorliegenden Ausführungsbeispiel Schrauben vorgesehen, die jedoch bei Wunsch oder Bedarf durch andere kraft- und/oder auch formschlüssige Halteelemente ersetzt werden können.

Aus der Fig. 1 geht ferner hervor, daß am ersten Gehäuse 1 zu einem Bremsdruckgeber 17 führende Bremsleitungen 18 angeschlossen sind, wobei in der abbildungsgemäßen Teilschnittdarstellung des Gehäuses 1 beispielhaft der Radbremsdruck einer Radbremse 20 über einen entsprechenden Druckkanal 21 im ersten Gehäuse 1 jeweils vom Drucksensor 4 einer jeden Radbremse 20 sensiert wird. Obwohl im nachfolgenden lediglich der Begriff Drucksensor verwendet wird, kann an dessen Stelle selbstverständlich bei Wunsch oder Bedarf auch ein Druckschalter verwendet werden.

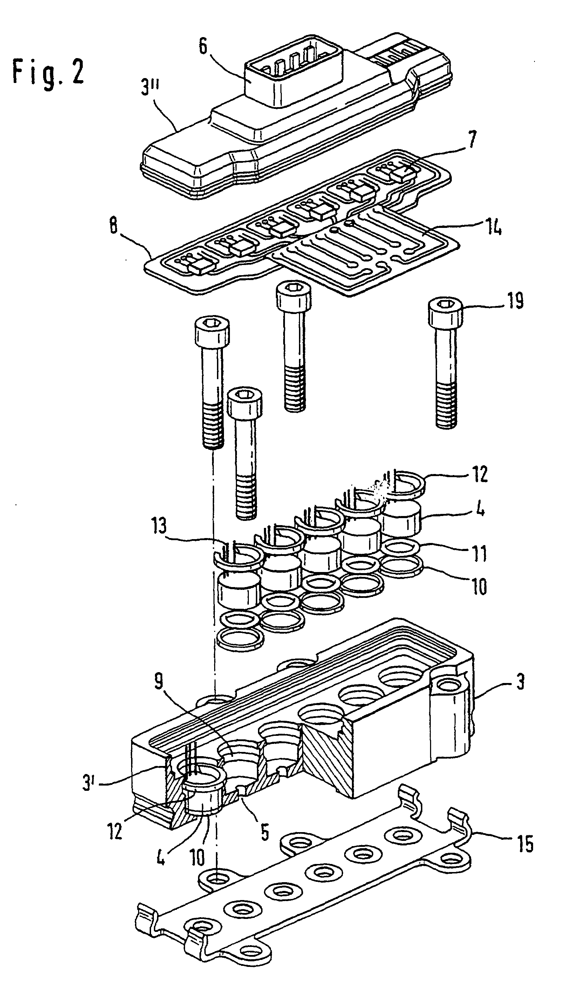

Zum elektrischen Anschluß der im blockförmigen Gehäuse 3 reihenförmig eingesetzten Drucksensoren 4 an einen elektronischen Regler, der im Gehäuse 2 angeordnet ist, befindet sich auf dem Gehäuse 3 ein Gehäusedeckel 3", der mit einer einzigen Steckeraufnahme 6 versehen ist. Die weiteren Einzelheiten zur elektrischen Verbindung der Drucksensoren 4 mit der Steckeraufnahme 6 werden anschlie8end anhand der Darstellung in Fig. 2 näher erläutert.

Die Anordnung des Drucksteuermoduls mittels des Trägergehäuses 3 zwischen dem Gehäuse 1 und dem Gehäuse 2 ermöglicht eine besonders einfache Herstellung sowie Funktionsprüfung der einzelnen Baugruppen, inclusive des Drucksteuergerätes 16. Das mit den Drucksensoren 4 funktionsfähig vorbestückte Trägergehäuse 3 ist mittels mehrerer am Umfang verteilter Schrauben an der dem Gehäuse 2 zugewandten Stirnflächenbereich des Gehäuses 1 befestigt, so daß beim Zusammenfügen beider Gehäuse 1,2 die als Vorsprung am Gehäuse 2 ausgebildete Kontaktfläche quasi als Gegenstecker lediglich auf die Steckeraufnahme 6 des Drucksensorbaugruppe aufzusetzen ist.

Damit ist auf an sich bekannte und einfache Weise ein einziger Analogausgang und die elektrische Kontaktierung aller Drucksensoren 4 über die einfache Steckverbindung zum elektronischen Regler im Gehäuse 2 gewährleistet. Durch die vorgeschlagene Anordnung, Befestigung und Kontaktierung des Drucksensormoduls zwischen den beiden Gehäusen 1,2 ist somit ein kompakte Bauweise geschaffen.

Der genaue Aufbau des Drucksensormoduls soll im nachfolgenden anhand der Fig. 2 näher erläutert werden. Das Drucksensormodul besteht im wesentlichen aus dem voranbezeichneten Trägergehäuse 3, welches mit ersten und zweiten diametralen Stirnflächen versehen ist, wobei die erste Stirnfläche mehrere in einer Reihe angeordnete Druckaufnahmeöffnungen 5 und die zweite Stirnfläche eine einzige zentrale elektromechanische Steckeraufnahme 6 aufweist. Das Trägergehäuse 3 besteht im wesentlichen aus einem Gehäuserahmen 3' zur Aufnahme von elektromechanischen Komponenten und einem Deckel 3" zum Verschlu8 des Gehäuserahmens 3'. Zwischen dem Gehäuserahmen 3' und dem Deckel 3" befinden sich elektrische bzw. elektronische Bauelemente 7 auf einer einzigen Platine 8 angeordnet, die im Gehäuserahmen 3' nah zu den in den Stufenbohrungen 9 des Trägergehäuses 3 eingesetzten Drucksensoren 4 ausgerichtet ist.

In jede Stufenbohrung 9 werden in der nachfolgenden maschinellen Reihenfolge jeweils in Richtung der Druckaufnahmeöffnung 5 ein Stützring 10, ein Dichtring 11, ein Drucksensor 4 und ein Sprengring 12 eingesetzt. Mit dem Sprengring 12 sind vorgenannte Bauteile jeweils im Trägergehäuse 3 lagegesichert und halten dem hohen hydraulischen Druck im Gehäuse 3 stand. Zur Befestigung des Sprengrings 12 in der Stufenbohrung 9 befindet sich dort eine Hinterdrehung bzw. Ringnut, worin sich der Sprengring 12 mit dem Einsetzen selbsttätig verriegelt. Der Stützring 10 und der Dichtring 11 sind jeweils vor dem Einsetzen des knopfförmigen Drucksensors 4 in der Stufenbohrung 9 eingelegt. Die Kontaktstifte 13 der Drucksensoren 4 sind auf die Platine 8 gerichtet und vorzugsweise als Steck- oder Lötkontakte ausgeführt. Die Platine 8 ist in den Gehäuserahmen 3' eingeführt und fixiert und nimmt die für die Drucksensoren 4 notwendige Auswerteelektronik in Form von elektronischen Bauelementen 7 auf. Über eine flexible Leiterfolie bzw. Leiterbahn 14 läßt sich die Platine 8 mit den Kontakten der Steckeraufnahme 6 im Deckel 3" elektrisch anschließen. Es ist jedoch bei Wunsch oder Bedarf auch möglich, die Platine 8 im Deckel 3' zu positionieren, wenn die Drucksensorkontaktierung ausschließlich über Steckkontakte erfolgt. Die Abdichtung des Trägergehäuses 3 gegenhber dem Gehäuse 1 erfolgt mittels einer Dichtplatte 15, die mit konzentrisch zu den Druckaufnahmeöffnungen 5 ausgerichteten Durchlässe aufweist, wobei gemäß dem vorgeschlagenen Ausführungsbeispiel die Dichtplatte 15 einerseits in eine Ausnehmung des Trägergehäuses 3 verrastet und andererseits durch die das Trägergehäuse 3 und die Dichtplatte 15 durchdringenden Befestigungsschrauben 19 ausgerichtet ist.

Erfindungsgemäß sind folglich mehrere in einer Reihe angeordnete Drucksensoren 4 kompakt in einem gemeinsamen Trägergehäuse 3 zu einem Drucksensormodul integriert, das überdies die wesentlichen elektrischen und elektronischen Bauelemente 7 auf einer Platine 8 aufnimmt, um zu einer einzigen analogen Schnittstelle zu kommen, die in einer kompakten Steckeraufnahme 6 resultiert. Durch diese Integrationsmaßnahmen wird zwangsläufig eine Kostenreduktion bei der Herstellung des Drucksensormoduls als auch beim Montageaufwand erzielt.

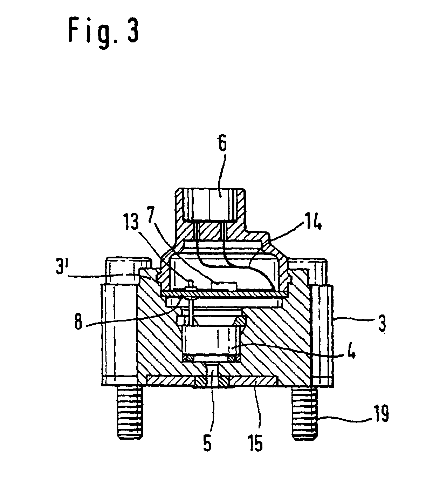

Die Fig. 3 zeigt hierzu eine Schnittdarstellung der in Figur 2 abgebildeten Drucksensorbaugruppe, bestehend aus dem blockförmigen Trägergehäuse 3, in das parallel nebeneinander mehrere Stufenbohrungen 9 zur Aufnahme der Drucksensoren 4 eingebracht sind, die sich über die entsprechend zugeordneten Druckaufnahmeöffnungen 5 bis zu den Durchlässen in der Dichtplatte 15 erstrecken. Auf der hiervon abgewandten Stirnseite des Gehäuses 3 befindet sich der mit der Steckeraufnahme 6 versehene Deckel 3", der verstemmt oder am Gehäuserahmen 3' aufgeclipst gehalten wird. Die Platine 8 ist entsprechend den voran erwähnten Einzelheiten im Gehäuserahmen 3' fixiert und über die Kontaktstifte 13 des Drucksensors 4 und flexible Leiterbahnen 14 an der Steckeraufnahme 6 angeschlossen. Die Befestigungsschrauben 19 sind zwecks Herstellung einer Flanschverbindung mit dem Gehäuse 1 gleichfalls gezeigt.

### Bezugszeichenliste

- 1: Gehäuse
- 2: Gehäuse
- 3: Trägergehäuse
- 3': Gehäuserahmen
- 3": Deckel
- 4: Drucksensor
- 5: Druckaufnahmeöffnung
- 6: Steckeraufnahme
- 7: Bauteile
- 8: Platine
- 9: Stufenbohrung
- 10: Stützring
- 11: Dichtring
- 12: Sprengring
- 13: Kontaktstift
- 14: Leiterbahn
- 15: Dichtplatte
- 16: Drucksteuergerät
- 17: Bremsdruckgeber
- 18: Bremsleitung
- 19: Befestigungsschraube
- 20: Radbremse
- 21: Druckkanal

## Patentansprüche

1. Drucksensorbaugruppe für ein Drucksteuergerät (16), das mit einem ersten Gehäuse (1) zur Aufnahme von mehreren elektrisch betätigbaren Drucksteuerventilen und mit einem zweiten Gehäuse (2) zur Aufnahme von elektrischen und /oder elektronischen Bauelementen versehen ist, die beim Aufsetzen des zweiten Gehäuses (2) auf das erste Gehäuse (1) die Drucksteuerventile elektrisch kontaktieren, wobei das Drucksteuergerät (16) wenigstens ein paar den Druck im ersten Gehäuse (1) erfassenden Drucksensoren (4) aufweist, die vorzugsweise zwischen dem ersten und zweiten Gehäuse (1,2) angeordnet sind, wobei ein Trägergehäuse (3) zur Aufnahme mehrerer Drucksensoren (4) vorgesehen ist, **dadurch gekennzeichnet, daß** das Trägergehäuse (3) die Drucksensoren (4) als modulare und vorprüfbare Baugruppe aufnimmt, welche eine eigenständig handhabbare, zwischen dem ersten und zweiten Gehäuse (1,2) des Drucksteuergeräts (16) positionierbare Unterbaugruppe bildet, wozu das Trägergehäuse (3) zur elektrischen Kontaktierung aller Drucksensoren (4) mit den elektrischen und/oder elektronischen Bauelementen eines elektronischen Reglers im zweiten Gehäuse (2) eine einzige Steckverbindung aufweist.

2. Drucksensorbaugruppe nach Anspruch 1, **dadurch gekennzeichnet, daß** das Trägergehäuse (3) mit einer ersten und einer zweiten diametralen Stirnfläche versehen ist, wobei die erste Stirnfläche hydraulische Druckaufnahmeöffnungen (5) und die zweite Stirnfläche eine elektromechanische Steckeraufnahme (6) aufweist.

3. Drucksensorbaugruppe nach Anspruch 1 , **dadurch gekennzeichnet, daß** das Trägergehäuse (3) einen Gehäuserahmen (3') zur Aufnahme von elektromechanischen und /oder elektronischen Komponenten der Drucksensoren (4) aufweist, auf dem ein Deckel (3") zum Verschluß des Gehäuserahmens (3') aufgesetzt ist, der eine elektrische Kontaktierung der Komponenten im Gehäuse (3) mit den elektrischen und/oder elektronischen Bauelementen im zweiten Gehäuse (2) herstellt.

4. Drucksensorbaugruppe nach Anspruch 3, **dadurch gekennzeichnet, daß** zwischen dem Gehäuserahmen (3') und dem Deckel (3") zur Aufnahme von elektrischen und/oder elektronischen Bauelementen eine Platine (8) angeordnet ist, die planar zu den in mehreren Stufenbohrungen (9) des Trägergehäuses (3) in Reihe eingesetzten Drucksensoren (4) ausgerichtet ist.

5. Drucksensorbaugruppe nach Anspruch 4, **dadurch gekennzeichnet, daß** in jede Stufenbohrung (9) in maschineller Reihenfolge jeweils in Richtung einer Druckaufnahmeöffnung (5) ein Stützring (10), ein Dichtring (11), ein Drucksensor (4) und ein Sprengring (12) eingesetzt sind.

6. Drucksensorbaugruppe nach Anspruch 4, **dadurch gekenn zeichnet,** daß mehrere Kontaktstifte (13) eines jeden Drucksensors (4) auf die Platine (8) gerichtet sind, die mit Steck- oder Lötkontaktierung auf die Kontakt stifte (13) aufgesetzt ist.

7. Drucksensorbaugruppe nach Anspruch 4, **dadurch gekennzeichnet, daß** der Gehäuserahmen (3') die Platine (8) zur elektrischen Kontaktierung der Drucksensoren (4) fixiert.

8. Drucksensorbaugruppe nach Anspruch 2, **dadurch gekennzeichnet, daß** die elektromechanische Steckeraufnahme (6) mittels flexibler Leiterbahn (14), vorzugsweise mittels Leiterbahnfolie oder dergleichen an der Platine (8) angeschlossen ist.

9. Drucksensorbaugruppe nach Anspruch 8, **dadurch gekennzeichnet, daß** die Leiterbahn (14) zwischen dem Deckel (3") und dem Gehäuserahmen (3') untergebracht ist.

10. Drucksensorbaugruppe nach Anspruch 2, **dadurch gekennzeichnet, daß** zwischen dem ersten Gehäuse (1) und dem Trägergehäuse (3) eine Dichtplatte (15) angeordnet ist, deren Durchlässe (18) konzentrisch zu den Druckaufnahmeöffnungen (5) ausgerichtet sind, wobei die Dichtplatte (15) am Trägergehäuse (3) fixiert ist.

11. Drucksensorbaugruppe nach Anspruch 10, **dadurch gekenn zeichnet,** daß die Dichtplatte (15) im Umfang an das dritte Gehäuse (3) angepaßt ist und an den Umfangsflächen des Trägergehäuses (3) kraft- und/oder formschlüssig gehalten ist.

## Claims

1. A pressure sensor unit for a pressure control device (16), comprising a first housing (1) for holding several electrically actuatable pressure control valves and a second housing (2) for holding electric and/or electronic components which make electric contact to the pressure control valves when the second housing (2) is placed on the first housing (1), with the pressure control device (16) exhibiting at least one pair of pressure sensors (4) sensing the pressure in the first housing (1) and preferably being arranged between the first and second housing (1, 2), wherein a carrier housing (3) for holding several pressure sensors (4) is provided,
**characterized in that** the carrier housing (3) accepts the pressure sensors (4) as a modular assembly that can be tested preliminarily, with this forming an independent subassembly that preferably can be positioned between the first and second housing (1,2) of the pressure control device (16), to what end the carrier housing (3) includes one single plug connection for the electrical contact making of all pressure sensors (4) with the electric and/or electronic components of an electronic controller in the second housing (2).

2. A pressure sensor unit according to Claim 1, **characterized in that** the carrier housing (3) has a first and second diametrical end face, with the first end face exhibiting hydraulic pressure intake openings (5) and the second end face exhibiting an electromechanical plug attachment (6).

3. A pressure sensor unit according to Claim 1, **characterized in that** the carrier housing (3) exhibits a housing frame (3') for holding electromechanical and/or electronic components of the pressure sensors (4), wherein a cover (3") is placed on the carrier housing (3) to close the housing frame (3') and establish electric contact between the components in the housing (3) and the electric and/or electronic components in the second housing (2).

4. A pressure sensor unit according to Claim 3, **characterized in that** a printed circuit board (8) for holding electric and/or electronic components is arranged between the housing frame (3') and the cover (3"), with such printed circuit board (8) being oriented on a plane to the pressure sensors (4) inserted in a row in the stepped bores (9) of the carrier housing (3).

5. A pressure sensor unit according to Claim 4, **characterized in that** a bearing ring (10), a sealing ring (11), a pressure sensor (4) and a retaining ring (12) are inserted in every stepped bore (9) in the above order in the direction towards a pressure intake opening (5).

6. A pressure sensor unit according to Claim 4, **characterized in that** several contact pins (13) of every pressure sensor (4) are oriented towards the printed circuit board (8), which is placed on the contact pins (13) by means of plug or soldering contacts.

7. A pressure sensor unit according to Claim 4, **characterized in that** the housing frame (3') fixes in place the printed circuit board (8) for establishing the electric contacting of the pressure sensors (4).

8. A pressure sensor unit according to Claim 2, **characterized in that** the electromechanical plug attachment (6) is connected to the printed circuit board (8) by means of flexible conductor tracks (14), preferably a conductor foil or a similar element.

9. A pressure sensor unit according to Claim 8,,
**characterized in that** the conductor track (14) is arranged between the cover (3") and the housing frame (3').

10. A pressure sensor unit according to Claim 2, **characterized in that** a sealing plate (15) is arranged between the first housing (1) and the carrier housing (3), the openings (18) of which sealing plate are aligned concentrically to the pressure intake openings (5), and the said sealing plate (15) being fastened to the carrier housing (3).

11. A pressure sensor unit according to Claim 10,
**characterized in that** the circumference of the sealing plate (15) is adapted to the third housing (3) and is held in place on the circumference surfaces of the carrier housing (3) in operative and/or frictional engagement therewith.

## Revendications

1. Bloc de détecteurs de pression pour un appareil de commande de pression (16), qui est pourvu d'un premier boîtier (1) destiné à recevoir plusieurs soupapes de commande de pression à actionnement électrique et d'un deuxième boîtier (2) destiné à recevoir des composants électriques et/ou électroniques qui établissent un contact électrique avec les soupapes de commande de pression lorsque le deuxième boîtier (2) est placé sur le premier boîtier (1), l'appareil de commande de pression (16) comportant au moins une paire de détecteurs de pression (4) qui détectent la pression dans le premier boîtier (1) et qui sont disposés de préférence entre le premier et le deuxième boîtier (1, 2), un boîtier de support (3) étant prévu pour recevoir plusieurs détecteurs de pression (4), **caractérisé en ce que** le boîtier de support (3) reçoit les détecteurs de pression (4) en tant que bloc modulaire pouvant être contrôlé au préalable, qui forme un sous-ensemble manipulable de manière autonome, à positionner entre le premier et le deuxième boîtier (1, 2) de l'appareil de commande de pression (16), le boîtier de support (3) comportant à cet effet une seule liaison par enfichage pour la mise en contact électrique de tous les détecteurs de pression (4) avec les composants électriques et/ou électroniques d'un régulateur électronique dans le deuxième boîtier (2).

2. Bloc de détecteurs de pression selon la revendication 1, **caractérisé en ce que** le boîtier de support (3) est pourvu de première et deuxième surfaces frontales diamétrales, la première surface frontale présentant des orifices (5) de réception de pression hydraulique et la deuxième surface frontale comportant un logement (6) de connecteur électromécanique.

3. Bloc de détecteurs de pression selon la revendication 1, **caractérisé en ce que** le boîtier de support (3) comporte un cadre de boîtier (3') destiné à recevoir des composants électromécaniques et/ou électroniques des détecteurs de pression (4), sur lequel est placé un couvercle (3") pour la fermeture du cadre de boîtier (3'), lequel couvercle réalise un contact électrique des composants dans le boîtier (3) avec les composants électriques et/ou électroniques dans le deuxième boîtier (2).

4. Bloc de détecteurs de pression selon la revendication 3, **caractérisé en ce qu'**il est prévu entre le cadre de boîtier (3') et le couvercle (3"), pour recevoir des composants électriques et/ou électroniques, une platine (8) qui est orientée à plat par rapport aux détecteurs de pression (4) insérés en ligne dans plusieurs trous étagés (9) du boîtier de support (3).

5. Bloc de détecteurs de pression selon la revendication 4, **caractérisé en ce que** dans chaque trou étagé (9) sont insérés, dans une succession mécanique, toujours en direction d'un orifice de réception de pression (5), une bague d'appui (10), une bague d'étanchéité (11), un détecteur de pression (4) et un jonc (12).

6. Bloc de détecteurs de pression selon la revendication 4, **caractérisé en ce que** plusieurs broches de contact (13) de chaque détecteur de pression (4) sont dirigées vers la platine (8) qui est placée sur les broches de contact (13), par mise en contact par enfichage ou par brasage.

7. Bloc de détecteurs de pression selon la revendication 4, **caractérisé en ce que** le cadre de boîtier (3') fixe la platine (8) pour la mise en contact électrique des détecteurs de pression (4).

8. Bloc de détecteurs de pression selon la revendication 2, **caractérisé en ce que** le logement de connecteur électromécanique (6) est raccordé à la platine (8), au moyen d'une piste conductrice flexible (14), de préférence au moyen d'une feuille de piste conductrice ou similaire.

9. Bloc de détecteurs de pression selon la revendication 8, **caractérisé en ce que** la piste conductrice (14) est logée entre le couvercle (3") et le cadre de boîtier (3').

10. Bloc de détecteurs de pression selon la revendication 2, **caractérisé en ce qu'**il est prévu entre le premier boîtier (1) et le boîtier de support (3), une plaque d'étanchéité (15) dont les passages (18) sont orientés concentriquement par rapport aux orifices de réception de pression (5), la plaque d'étanchéité (15) étant fixée au boîtier de support (3).

11. Bloc de détecteurs de pression selon la revendication 10, **caractérisé en ce que** la plaque d'étanchéité (15) est de pourtour adapté au troisième boîtier (3) et est maintenue sur les surfaces périphériques du boîtier de support (3), à force et/ou par complémentarité de forme.
